# EUROPEAN PATENT APPLICATION

(11) **EP 2 259 199 A1**
(43) Date of publication of application: **08.12.2010**
(21) Application number: 10005145.7
(22) Date of filing: 17.05.2010
(51) Int. Cl.: G06F 17/30

(54) **Display device, data conversion method, and computer-readable medium storing data conversion programm**

(30) Priority: 22.05.2009 JP 2009124567; 22.05.2009 JP 2009124573
(71) Applicant: BROTHER KOGYO KABUSHIKI KAISHA, Aichi-ken 467-8561 (JP)
(72) Inventor: Kusumoto, Yoshihisa, Nagoya-shi Aichi-ken 467-8562 (JP)
(74) Representative: Kuhnen & Wacker

(57) **Abstract**

A display device (1) can display an electronic file in a specified data format on a display panel (3). When a USB cable is removed (YES at Step S11) or when a memory card (30) is inserted (YES at Step S12), a determination is made that it is a timing of converting an electronic file in a data format that is different from the specified data format into an electronic file in the specified data format. A screen indicating that data conversion is in progress is displayed (Step S16), and electronic file conversion is sequentially performed (Step S23).

## Description

### BACKGROUND

The present invention relates to a display device that displays an electronic file of a specified data format, as well as to a data conversion method and a computer-readable medium storing a data conversion program that are used by the display device.

A display device is known that displays an electronic file of a specified data format. A user desires the display device to display an electronic file of another data format that is different from the specified data format. A method is known that uses a device such as personal computer or the like to convert the electronic file of the other data format into an electronic file of the specified data format, then causes the display device to process the converted file (refer to, for example, Japanese Laid-Open Patent Publication No. 2006-65204 and Japanese Laid-Open Patent Publication No. 2009-31878).

### SUMMARY

With the known method that is described above, in a case where the electronic file of the other data format is to be displayed on the display device, a user must use a device that is capable of converting the electronic file into the electronic file of the specified data format, which is troublesome.

It is an object of the present invention to provide a display device, as well as a data conversion method and a computer-readable medium storing a data conversion program that are capable of converting an electronic file into an electronic file of a specified data format without requiring a command from a user.

A display device according to a first aspect of the present invention includes: a timing determination portion that determines whether it is a timing of converting an incompatible file into an electronic file in a specified data format, the incompatible file being an electronic file in a data format different from the specified data format; a file acquisition portion that acquires the incompatible file from a first storage device when the timing determination portion determines that it is the timing; a conversion portion that converts the incompatible file acquired by the file acquisition portion into an electronic file in the specified data format to create a converted file; and a first storage control portion that stores, in a second storage device, the converted file created by the conversion portion.

With the above display device, the electronic file can be converted into the electronic file in the specified data format, without the user inputting a command to convert the data format. It is therefore possible to reduce the user's operation load. Further, since there is no need for the user to confirm whether it is the timing suitable to perform the conversion of the data format, the user can easily view the electronic file on the display device.

The display device according to the first aspect may further include: a connection portion that connects to an external device that transmits an electronic file; a second storage control portion that causes the first storage device to store the electronic file received from the external device via the connection portion; and a disconnection determination portion that determines whether the connection by the connection portion is disconnected. When the disconnection determination portion determines that the connection by the connection portion is disconnected, the timing determination portion may determine that it is the timing.

In this case, the display device can automatically start conversion of the received electronic file into the specified data format, at the timing at which reception of the electronic file from an external device is completed. Since the data conversion is started when the connection with the external device is disconnected, the data conversion is not started while reception of the electronic file is in progress. Therefore, it is possible to reduce a possibility of a conversion failure, an increase in processing load, and the like.

The display device according to the first aspect may further include: an attachment portion to which and from which an external storage device can be attached and detached, the external storage device being attachable to and detachable from another device; and an attachment determination portion that determines whether the external storage device is attached to the attachment portion. The first storage device may be the external storage device. When the attachment determination portion determines that the external storage device is attached to the attachment portion, the timing determination portion may determine that it is the timing. In this case, the user can cause the display device to convert the incompatible file, simply by attaching the external storage device to the display device.

In the display device according to the first aspect, the file acquisition portion may acquire the incompatible file, among the incompatible files that have not been acquired by the file acquisition portion, in an order of registration date and time registered by a user, starting with the incompatible file with the oldest date and time. In this case the user can easily ascertain the progress of the data conversion.

In the display device according to the first aspect, the file acquisition portion may acquire the incompatible file, among the incompatible files that have not been acquired by the file acquisition portion, in an order of registration date and time registered by a user, starting with the incompatible file with the most recent date and time. In this case the user can quickly view the electronic file with the most recent registration date and time.

The display device according to the first aspect may further include: a size calculation portion that calculates a post-conversion size that is an estimated data size of the converted file to be created from the incompatible file acquired by the file acquisition portion; and a first capacity determination portion that determines whether the post-conversion size calculated by the size calculation portion is equal to or smaller than an available capacity of the second storage device. The conversion portion may create the converted file, when the first capacity determination portion determines that the post-conversion size is equal to or smaller than the available capacity of the second storage device.

In this case, when a determination is made that the post-conversion size is equal to or smaller than the available capacity of the second storage device, the converted file is created from the incompatible file. Therefore, it is possible to suppress a situation in which the converted file cannot be stored in the second storage device, regardless of the fact that the converted file is created from the incompatible file.

In the display device according to the first aspect, the file acquisition portion may acquire the incompatible file, among the incompatible files that have not been acquired by the file acquisition portion, in an order of a data size, starting with the incompatible file whose data size is the largest. In this case, the incompatible file that has a high possibility of having the largest post-conversion size is converted by priority. It is therefore possible to efficiently suppress the situation in which the converted file cannot be stored in the second storage device.

In the display device according to the first aspect, among the incompatible files that have not been acquired by the file acquisition portion, the file acquisition portion may acquire the incompatible file whose data size is the second largest to the incompatible file that has been most recently acquired. In this case, even when the post-conversion size of the most recently acquired incompatible file is larger than the available capacity of the second storage device, there is a possibility that the post-conversion size of the incompatible file to be acquired next will be smaller than the available capacity of the second storage device. Therefore, it is possible to use the available capacity of the second storage device most efficiently.

In the display device according to the first aspect, the incompatible file may include a plurality of segment data formed in predetermined units, the conversion portion may convert the plurality of segment data included in the incompatible file into the specified data format one at a time to create converted segment data, and the conversion portion may create the converted file by storing the converted segment data in the second storage device. The display device may further include: a second capacity determination portion that determines whether an available capacity capable of storing the converted segment data exists in the second storage device, every time the converted segment data is created by the conversion portion; and a first deletion portion that deletes the converted segment data stored in the second storage device, when the second capacity determination portion determines that the available capacity capable of storing the converted segment data does not exist. In this case, it is possible to inhibit the file for which the conversion is not completed from being stored in the second storage device, and also it is possible to ensure the available capacity of the second storage device.

In the display device according to the first aspect, the segment data may be image data formed in page units. The size calculation portion may calculate the post-conversion size based on a number of pages corresponding to an amount of the image data contained in the incompatible file. In this case, the post-conversion size can be calculated by a simple process.

The display device according to the first aspect may further include: a file determination portion that determines whether the incompatible file exists in a specified folder of the first storage device. The conversion portion may only convert the incompatible file in the specified folder to create the converted file. In this case, the user can easily view the electronic file by storing in the specified folder the electronic file that the user wants to view.

The display device according to the first aspect may further include: a completion determination portion that determines whether conversion is completed by the conversion portion; and a second deletion portion that deletes from the first storage device the incompatible file for which the conversion is completed, when the completion determination portion determines that the conversion is completed. In this case, the incompatible file and the converted file do not both exist. This makes it possible to inhibit the storage capacity from being compressed. This also makes it possible to inhibit the same incompatible file from being unnecessarily converted a plurality of times.

In the display device according to the first aspect, when the completion determination portion determines that the conversion is completed, the second deletion portion may delete the incompatible file for which the conversion is completed, from a common storage device that includes the first storage device and the second storage device. When the incompatible file is deleted by the second deletion portion, the file acquisition portion may acquire the next incompatible file from the common storage device. In this case, the converted incompatible file is deleted from the common storage device, and thereafter, the conversion of the next incompatible file is performed. Therefore, the available capacity to store the converted file can be ensured in the common storage device.

The display device according to the first aspect may further include: a display control portion that, when the completion determination portion determines that the conversion is completed by the conversion portion, causes a display portion to display the converted file stored in the second storage device. In this case, the user can ascertain the electronic file for which the data conversion is completed.

The display device according to the first aspect may further include: a notification portion that, when conversion is being performed by the conversion portion, notifies the user that conversion of the incompatible file is in progress; and an inhibition portion that inhibits reception of an operation command from the user when the conversion is being performed by the conversion portion. In this case, the user can easily ascertain that the conversion of the incompatible file is in progress. The display device can smoothly perform a conversion process of the incompatible file.

A data conversion method according to a second aspect of the present invention includes the steps of: determining whether it is a timing of converting an incompatible file into an electronic file in a specified data format, the incompatible file being an electronic file in a data format different from the specified data format; acquiring the incompatible file from a first storage device when a determination is made that it is the timing; converting the acquired incompatible file into an electronic file in the specified data format to create a converted file; and storing the created converted file in a second storage device.

With the above data conversion method, the electronic file can be converted into the electronic file in the specified data format, without the user inputting a command to convert the data format. It is therefore possible to reduce the user's operation load. Further, since there is no need for the user to confirm whether it is the timing suitable to perform the conversion of the data format, the user can easily view the electronic file on the display device.

The data conversion method according to the second aspect may further include the steps of: calculating a post-conversion size that is an estimated data size of the converted file to be created from the acquired incompatible file; and determining whether the calculated post-conversion size is equal to or smaller than an available capacity of the second storage device. The converted file may be created from the acquired incompatible file, when a determination is made that the post-conversion size is equal to or smaller than the available capacity of the second storage device.

In this case, when a determination is made that the post-conversion size is equal to or smaller than the available capacity of the second storage device, the converted file is created from the acquired incompatible file. Therefore, it is possible to suppress a situation in which the converted file cannot be stored in the second storage device, regardless of the fact that the converted file is created from the acquired incompatible file.

A computer-readable medium storing a data conversion program according to a third aspect of the present invention is provided. The data conversion program includes instructions that cause a computer of a display device to perform the steps of: determining whether it is a timing of converting an incompatible file into an electronic file in a specified data format, the incompatible file being an electronic file in a data format different from the specified data format; acquiring the incompatible file from a first storage device when a determination is made that it is the timing; converting the acquired incompatible file into an electronic file in the specified data format to create a converted file; and storing the created converted file in a second storage device.

With the above computer-readable medium, the electronic file can be converted into the electronic file in the specified data format, without the user inputting a command to convert the data format. It is therefore possible to reduce the user's operation load. Further, since there is no need for the user to confirm whether it is the timing suitable to perform the conversion of the data format, the user can easily view the electronic file on the display device.

The computer-readable medium storing the data conversion program according to the third aspect, wherein the instructions may cause the computer to perform the steps of: calculating a post-conversion size that is an estimated data size of the converted file to be created from the acquired incompatible file; and determining whether the calculated post-conversion size is equal to or smaller than an available capacity of the second storage device. The converted file may be created from the acquired incompatible file, when a determination is made that the post-conversion size is equal to or smaller than the available capacity of the second storage device.

In this case, when a determination is made that the post-conversion size is equal to or smaller than the available capacity of the second storage device, the converted file is created from the acquired incompatible file. Therefore, it is possible to suppress a situation in which the converted file cannot be stored in the second storage device, regardless of the fact that the converted file is created from the acquired incompatible file.

### BRIEF DESCRIPTION OF THE DRAWINGS

Exemplary embodiments of the present disclosure will be described below in detail with reference to the accompanying drawings in which:
FIG. 1 is a system configuration diagram in which a portable terminal 1 is connected to a multifunction device 2;
FIG. 2 is a block diagram that shows an electrical configuration of the portable terminal 1;
FIG. 3 is a flowchart that shows standard setting processing;
FIG. 4 is a flowchart that shows main processing;
FIG. 5 is a front view of the portable terminal 1, on which a conversion-in-progress screen 31 is displayed;
FIG. 6 is a flowchart that shows data conversion processing;
FIG. 7 is a flowchart that shows conversion object selection processing;
FIG. 8 is a flowchart that shows memory full processing; and
FIG. 9 is a front view of the portable terminal 1, on which a memory full screen 32 is displayed.

### DETAILED DESCRIPTION OF THE EXEMPLARY EMBODIMENTS

Hereinafter, an embodiment that embodies the present disclosure will be explained with reference to the drawings. The referenced drawings are used to explain technical features that the present disclosure uses. A device configuration, flowcharts of various types of processing, and the like that are shown in the drawings are simply explanatory examples and do not limit the present disclosure to only those examples.

A portable terminal 1 of the present embodiment can be connected to a multifunction device 2 through a Universal Serial Bus (USB) cable 9. The multifunction device 2 has the functions of a printing device, a communication device, a telephone, a facsimile machine, a scanner, and a copy machine. The portable terminal 1 can display an image based on an electronic file that is output from the multifunction device 2. The electronic file of the present embodiment is a file that indicates a document that is configured from a plurality of pages. The electronic file is configured from image data for as many pages as configure the document (that is, image data that describe images of individual pages).

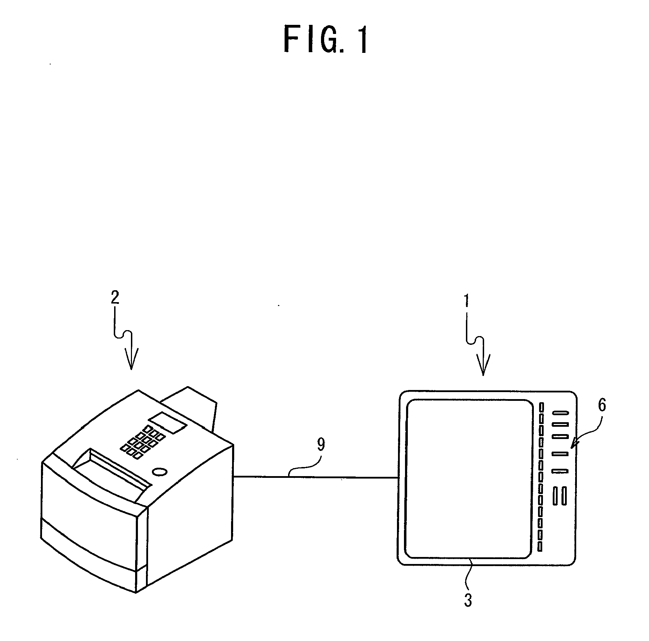

A physical configuration of the portable terminal 1 will be explained with reference to FIG. 1. The portable terminal 1 is a lightweight, slim portable display terminal that is provided with an electrophoretic display panel 3. The basic principle of the electrophoretic display panel is that a black and white image is formed by using electrophoresis to move positively charged white electrophoretic particles and negatively charged black electrophoretic particles in a display liquid.

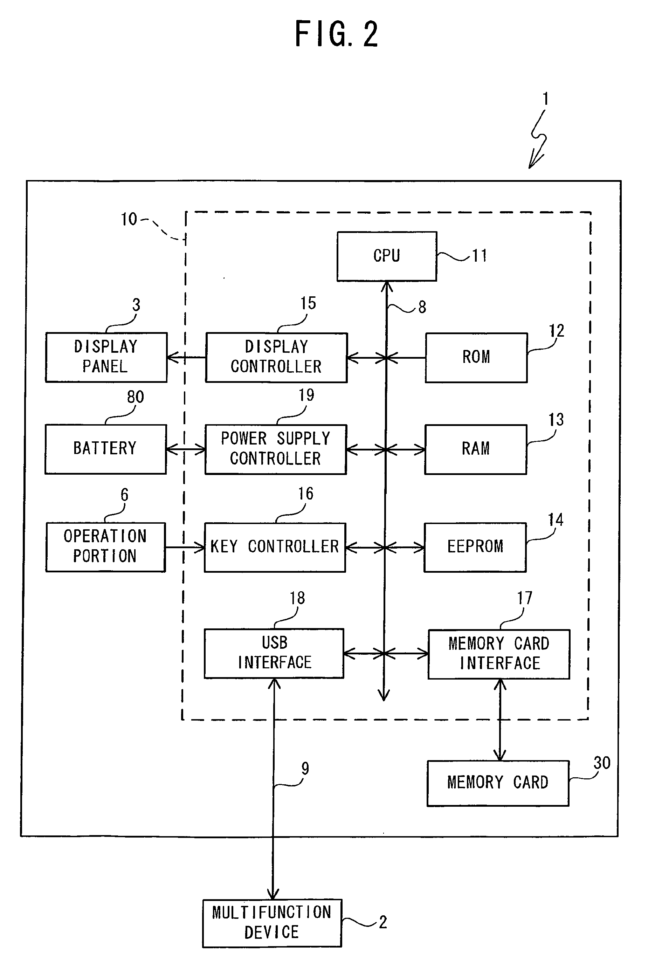

The portable terminal 1 is formed into a panel shape that is rectangular in a planar view and has a specified thickness. The display panel 3 is rectangular in the planar view and is provided on the top face of the portable terminal 1. The display panel 3 displays various types of content that are configured from text, diagrams, and the like. A user can visually recognize the content that is displayed on the display panel 3. A card slot, a USB port, a power supply connector, and the like are provided on a side face of the portable terminal 1, although these are not shown in the drawings. A memory card 30 (refer to FIG. 2) can be inserted into and removed from the card slot. A USB connector that the USB cable 9 has can be inserted into and removed from the USB port. A power supply cable 82 (refer to FIG. 2) has a terminal that can be attached to and removed from the power supply connector.

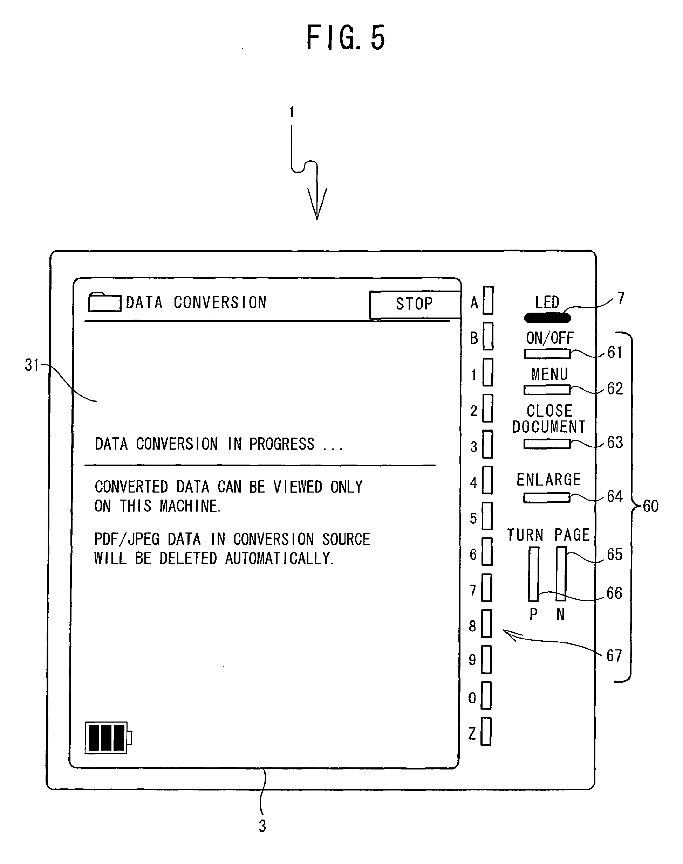

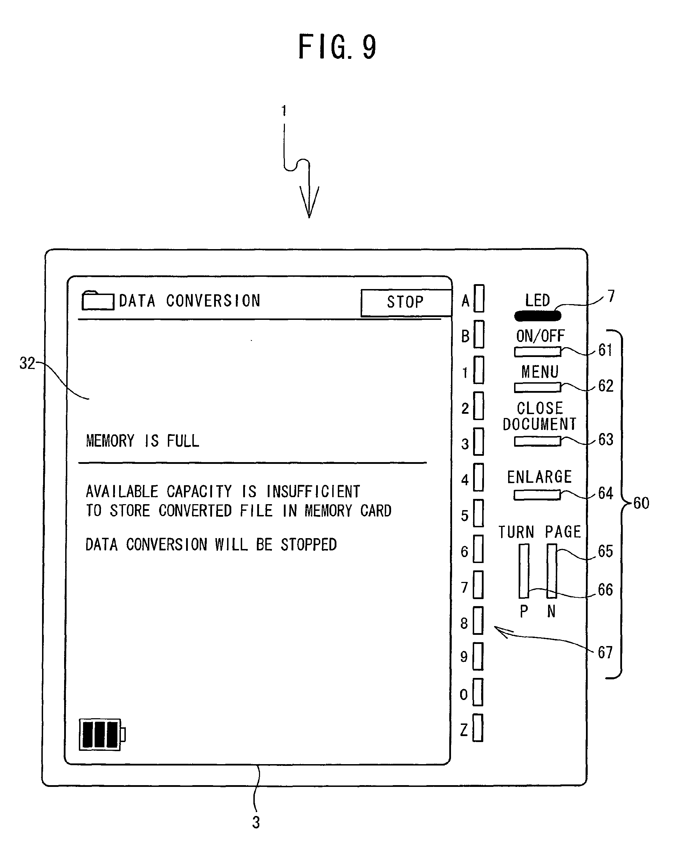

An operation portion 6 for operating the portable terminal 1 is provided to the right of the display panel 3. The operation portion 6 includes a power supply key 61, a menu key 62, a close document key 63, an enlarge key 64, a previous page key 65, a next page key 66, and character keys 67 (refer to FIG. 5 and FIG. 9). The power supply key 61 is a key for turning the power supply of the portable terminal 1 on and off. The menu key 62 is a key for displaying a menu screen for performing document selection, function setting, and the like on the portable terminal 1.

The close document key 63 is a key for closing an image of the electronic file that is being displayed. The enlarge key 64 is a key for enlarging the image of the electronic file that is being displayed. The previous page key 65 and the next page key 66 are keys for respectively going back one page and going forward one page in the electronic file that is being displayed. The character keys 67 are keys for performing selection and input of various types of information. An LED display portion 7 (refer to FIG 5 and FIG. 9) is provided above the power supply key 61. The LED display portion 7 uses an LED light-emitting pattern (a luminescent color, a continuous light, a flashing light, and the like) to indicate an operating state of the portable terminal 1.

An electrical configuration of the portable terminal 1 will be explained with reference to FIG. 2. A control panel 10 of the portable terminal 1 includes a CPU 11, a ROM 12, a RAM 13, an EEPROM 14, a display controller 15, a key controller 16, a memory card interface 17, a USB interface 18, and a power supply controller 19, and these elements are connected through a bus 8. The CPU 11 performs control of the portable terminal 1. The ROM 12 stores a control program that operates the portable terminal 1 and information that pertains to the operation of the portable terminal 1. The RAM 13 is a memory that temporarily stores various types of data. The EEPROM 14 is a non-volatile memory that stores various types of data.

The display controller 15 controls image display on the display panel 3. The key controller 16 accepts a key operation from the operation portion 6. The memory card 30 that is inserted into the card slot is connected to the memory card interface 17, and the memory card interface 17 performs reading and writing of data from and to the memory card 30. The USB interface 18 includes the USB port and transmits and receives data to and from an external device (in the present embodiment, the multifunction device 2) through the USB cable 9.

The power supply controller 19 controls charging and discharging of a battery 80 that is built into the portable terminal 1 and supplies electric power. The power supply controller 19 also detects the amount of power remaining in the battery 80 and a voltage drop in the battery 80, and it controls the voltage that is supplied to the portable terminal 1.

The portable terminal 1 of the present embodiment performs the image display on the display panel 3 based on an electronic file that is stored in the memory card 30 (more specifically, based on image data for individual pages that are contained in the electronic file). It is acceptable for an electronic file that is output from the multifunction device 2, as illustrated in an example that is described below, to be stored in the memory card 30.

For example, the user inserts the memory card 30 into a card slot (not shown in the drawings) in the multifunction device 2. In a case where the multifunction device 2 has acquired an electronic file by reading an image on a paper medium or the like, the multifunction device 2 writes the acquired electronic file to the memory card 30. The user removes from the multifunction device 2 the memory card 30 in which the electronic file is stored, and inserts it into the card slot in the portable terminal 1. This makes it possible for the portable terminal 1 to read the electronic file that has been written to the memory card 30 and to perform the image display.

The user can also insert the memory card 30 into the card slot (not shown in the drawings) in the portable terminal 1 and use the USB cable 9 to connect the portable terminal 1 and the multifunction device 2. In a case where the multifunction device 2 has acquired an electronic file by reading an image on a paper medium or the like, the multifunction device 2 transmits the acquired electronic file to the portable terminal 1 through the USB cable 9. The portable terminal 1 takes the electronic file that has been transmitted from the multifunction device 2 and writes it to the memory card 30. The transmitting and writing of the electronic file in this manner may be accomplished by a known function that is called scan-to-memory or another function, the function being provided in the multifunction device 2. In this case as well, it is possible for the portable terminal 1 to read the electronic file that has been written to the memory card 30 and to perform the image display.

The memory card 30 is a general-purpose storage medium that is capable of storing various types of data, not only the electronic file that is used by the portable terminal 1 for the image display. In the present embodiment, the electronic file that is written to the memory card 30 is stored in a specified folder in the memory card 30. This makes it possible to clearly distinguish the electronic file that is used by the portable terminal 1 for the image display from other data that are stored in the memory card 30.

The electronic file that is acquired by the multifunction device 2 is created in a general-purpose data format (for example, PDF, JPEG, or the like) that can be displayed on many electronic devices. In contrast, in the portable terminal 1, the image display is performed based on an electronic file of a specified data format. The specified data format is a data format that is suited to the image display by the portable terminal 1 that is performed under the display control of the electrophoretic method or the like. In a case where the electronic file that is stored in the memory card 30 is an incompatible file, the portable terminal 1 converts the incompatible file to an electronic file in the specified data format before performing the image display. The incompatible file is an electronic file in a data format that is different from the specified data format.

In the present embodiment, in a case where a plurality of the incompatible files are stored in the memory card 30, the incompatible files are selected one at a time and are sequentially converted into electronic files in the specified data format. File selection standards are stored in the EEPROM 14. The file selection standards are information indicating a prioritized order that is used to select a conversion object file. The conversion object file is an incompatible file that is selected from the plurality of incompatible files stored in the memory card 30, as a conversion object. In the present embodiment, four settings, namely, memory prioritization, battery prioritization, progress prioritization and date-time prioritization are prepared as the file selection standards in advance, and these will be described separately in detail later.

Hereinafter, various types of processing that are performed by the portable terminal 1 will be explained. Standard setting processing and main processing, which will be described below, are performed by the CPU 11 based on the control program stored in the ROM 12.

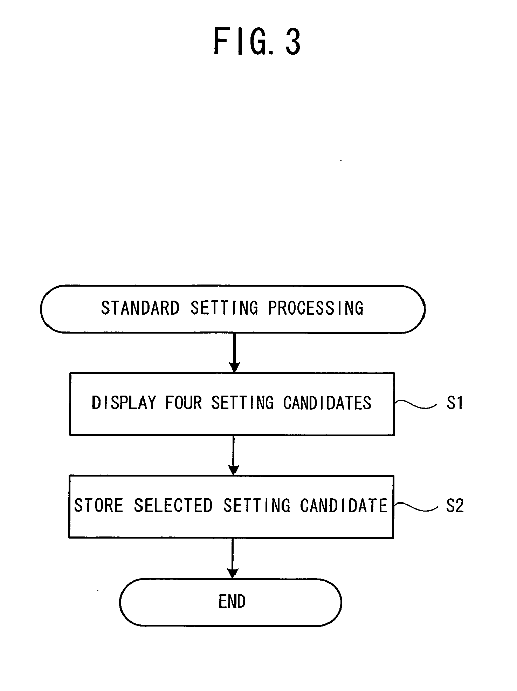

The standard setting processing that is performed by the portable terminal 1 will be explained with reference to FIG. 3. The standard setting processing is processing for the user to set the file selection standard. When the operation portion 6 is operated during display of the menu screen and the "file selection standard setting" menu is selected, the CPU 11 performs the standard setting processing shown in FIG. 3.

In the standard setting processing, first, the four file selection standards, namely, memory prioritization, battery prioritization, progress prioritization, and date-time prioritization are displayed as setting candidates on the display panel 3 (Step S1). Memory prioritization is the file selection standard to make it possible for the portable terminal 1 to convert more electronic files when, for example, the remaining memory capacity of the memory card 30 is small. Battery prioritization is the file selection standard to make it possible for the portable terminal 1 to convert more electronic files when, for example, the amount of power remaining in the battery 80 is small. Progress prioritization is the file selection standard to make it possible for the user to easily ascertain the progress of the electronic file conversion by the portable terminal 1. Date-time prioritization is the file selection standard to make it possible for the user to quickly view an electronic file with the most recent creation date and time.

When the operation portion 6 is operated and one of the four setting candidates is selected, the selected setting candidate is stored in the EEPROM 14 (Step S2). The stored setting candidate is the file selection standard that is referred to when a conversion object file is selected from the plurality of incompatible files.

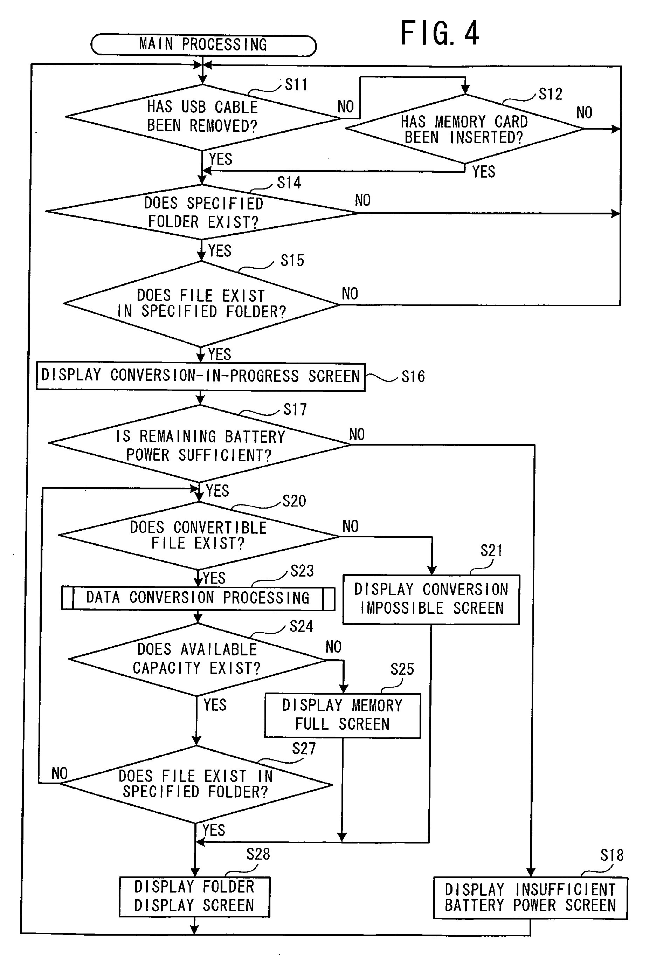

The main processing that is performed by the portable terminal 1 will be explained with reference to FIG. 4 to FIG. 9. The main processing that is shown in FIG. 4 is performed by the CPU 11 when the power supply key 61 is turned on, based on the control program that is stored in the ROM 12.

As shown in FIG. 4, in the main processing, first, a determination is made as to whether the USB cable 9 has been removed from the portable terminal 1 (Step S11). If a change from a state in which the USB cable 9 is connected to the USB interface 18 to a state in which the USB cable 9 is not connected is detected, the determination is made that the USB cable 9 has been removed from the portable terminal 1 (YES at Step S11). In contrast, in a case where the USB cable 9 has not been connected to the USB interface 18, as well as in a case where the state in which the USB cable 9 is connected has not changed, the determination is made that the USB cable 9 has not been removed from the portable terminal 1 (NO at Step S11).

In a case where the USB cable 9 has not been removed from the portable terminal 1 (NO at Step S11), a determination is made as to whether the memory card 30 has been inserted into the portable terminal 1 (Step S12). If a change from a state in which the memory card 30 has not been connected to the memory card interface 17 to a state in which the memory card 30 has been connected is detected, the determination is made that the memory card 30 has been inserted into the portable terminal 1 (YES at Step S12). In contrast, in a case where the memory card 30 has already been connected to the memory card interface 17, as well as in a case where the state in which the memory card 30 is not connected has not changed, the determination is made that the memory card 30 has not been inserted into the portable terminal 1 (NO at Step S12).

In a case where the USB cable 9 has been removed from the portable terminal 1 (YES at Step S11), the possibility exists that the electronic file has been transmitted through the USB cable 9 and the electronic file has been written in the memory card 30. In a case where the memory card 30 has been inserted into the portable terminal 1 (YES at Step S12), the possibility exists that the electronic file has been stored in advance in the inserted memory card 30. As described previously, the electronic file that is used for the image display by the portable terminal 1 is stored in the specified folder in the memory card 30. Accordingly, a determination is made as to whether the specified folder exists in a storage area of the memory card 30 that has been connected to the memory card interface 17 (Step S 14). In a case where the specified folder does exist in the memory card 30 (YES at Step S14), a determination is made as to whether the electronic file has been stored in the specified folder (Step S15).

In a case where the electronic file has been stored in the specified folder (YES at Step S15), a conversion-in-progress screen 31, an example of which is shown in FIG. 5, is displayed on the display panel 3 (Step S16). As shown in FIG. 5, a message to the effect that the converting of the data format of the electronic file is in progress is clearly displayed on the conversion-in-progress screen 31. At this time, the emission of light from the LED display portion 7 is controlled in a specified pattern that indicates that the data conversion is in progress, and the operations of the keys in the operation portion 6 are disabled.

In the present embodiment, if a specified trigger (specifically, the removal of the USB cable 9 or the insertion of the memory card 30) is detected, the data conversion of the electronic file is performed internally, as will be described later, without the input of a command by the user being required. If the user were to perform any operation while the data conversion is in progress, a problem such as the destruction of the electronic file, a malfunction of the portable terminal 1, or the like might occur. At Step S16, during the performing of the data conversion, it is possible to make the user aware that the data conversion is in progress by displaying the conversion-in-progress screen 31 and causing the LED display portion 7 to emit light in the specified pattern. Disabling the operations of the keys on the operation portion 6 makes it possible to prevent the user from performing an operation by mistake while the data conversion is in progress.

In a case where the memory card 30 has not been inserted into the portable terminal 1 (NO at Step S12), the processing returns to Step S11 and waits for the removal of the USB cable 9 or the insertion of the memory card 30 (Step S11 and Step S12). In a case where the specified folder does not exist in the memory card 30 (NO at Step S 14), and in a case where the electronic file has not been stored in the specified folder (NO at Step S 15), the processing returns to Step S11 in the same manner.

After the conversion-in-progress screen 31 is displayed at Step S16, a determination is made as to whether the amount of power remaining in the battery 80 is sufficient (Step S 17). The determination is made based on whether the voltage of the battery 80 detected by the power supply controller 19 is equal to or more than a predetermined threshold value. In the present embodiment, a voltage that can convert 200 pages' worth of the electronic file is used as a reference to set the threshold value. When the voltage of the battery 80 is less than the threshold value, a determination is made that the remaining amount of battery power is insufficient (NO at Step S 17). In this case, an insufficient battery power screen that includes a message to the effect that "the battery power is insufficient" is displayed on the display panel 3 (Step S 18). After Step S 18 has been performed, the processing returns to Step S 11.

In a case where the voltage of the battery 80 is equal to or more than the threshold value, a determination is made that the remaining amount of battery power is sufficient (YES at Step S 17). In this case, a determination is made as to whether a convertible file exists in the specified folder (Step S20). The convertible file is an incompatible file in a data format (for example, PDF or JPEG) that can be converted into the specified data format. In a case where a convertible file does not exist in the specified folder (NO at Step S20), a conversion impossible screen that includes a message to the effect that "a convertible file does not exist" is displayed on the display panel 3 (Step S21), and the processing proceeds to Step S28.

In a case where a convertible file does exist in the specified folder (YES at Step S20), data conversion processing is performed that converts the convertible file into an electronic file in the specified data format (Step S23).

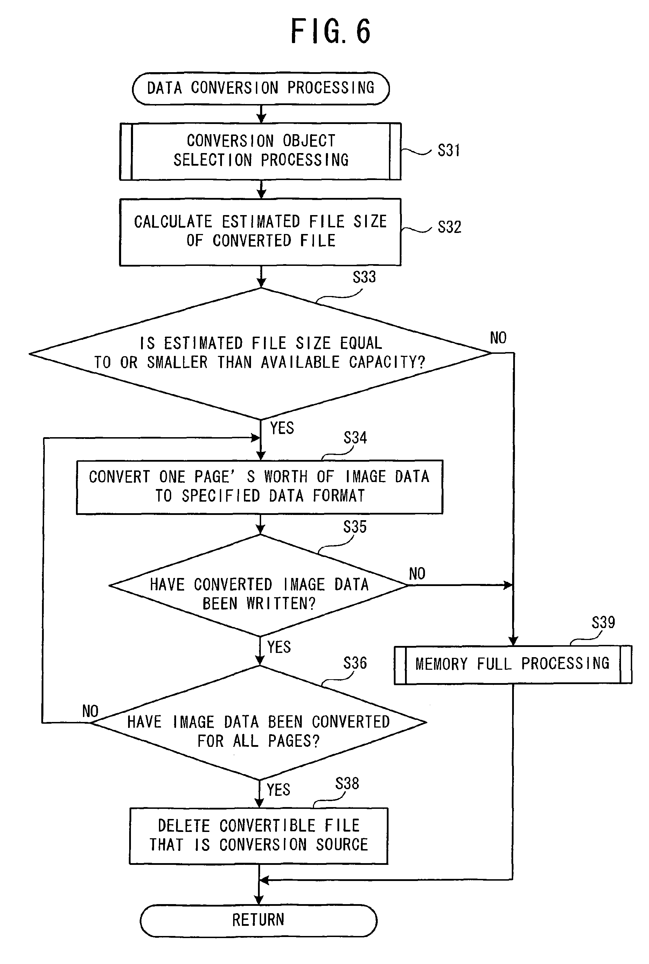

In the data conversion processing, as shown in FIG. 6, first, conversion object selection processing is performed in which one file is selected from the convertible files that are stored in the specified folder and is acquired into the RAM 13 as the conversion object file (Step S31).

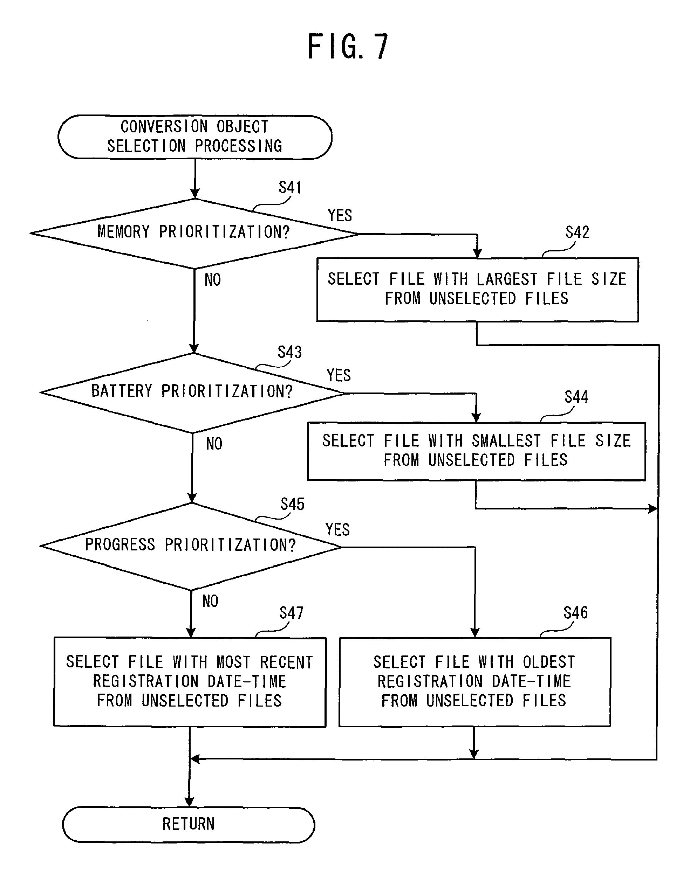

As shown in FIG. 7, in the conversion object selection processing, first, a determination is made as to whether memory prioritization has been set as the file selection standard in the EEPROM 14 (Step S41). In a case where memory prioritization has been set as the file selection standard (YES at Step S41), a file with the largest file size is selected as the conversion object file from among unselected files (Step S42). In a case in which a plurality of the convertible files are stored in the specified folder, the unselected file is a convertible file that has not yet been selected as the conversion object file by the conversion object selection processing.

After the data conversion of the convertible file is performed, the convertible file based on which the conversion has been performed and the electronic file that has obtained by the conversion both exist in the memory card 30. Accordingly, the larger the file size of the convertible file is, the more available capacity is required in the memory card 30. In the present embodiment, when memory prioritization has been set as the file selection standard, a convertible file with a larger file size is converted with priority.

In a case where memory prioritization has not been set as the file selection standard (NO at Step S41), a determination is made as to whether battery prioritization has been set as the file selection standard (Step S43). In a case where battery prioritization has been set as the file selection standard (YES at Step S43), a file with the smallest file size is selected as the conversion object file from the unselected files (Step S44). Accordingly, even when the amount of power remaining in the battery 80 is small and thus the battery power may run out while data conversion is in progress, it is possible to perform data conversion of as many convertible files as possible.

In a case where battery prioritization has not been set as the file selection standard (NO at Step S43), a determination is made as to whether progress prioritization has been set as the file selection standard (Step S45). In a case where progress prioritization has been set as the file selection standard (YES at Step S45), a file with the oldest registration date-time is selected as the conversion object file from the unselected files (Step S46). In this case, the convertible files are sequentially converted in the order of registration date-time, starting with the file with the oldest registration date-time. The user can therefore easily ascertain the conversion progress.

In a case where progress prioritization has not been set as the file selection standard (NO at Step S45), date-time prioritization has been set as the file selection standard. In this case, the file with the most recent registration date-time is selected as the conversion object file from the unselected files (Step S47). Therefore, the convertible files are sequentially converted in the order of registration date-time, starting with the file with the most recent registration date-time. Thus, it is possible to satisfy the needs of the user who wants to view the convertible file with the most recent registration date-time.

The conversion object file that is selected at one of Step S42, Step S44, Step S46 and Step S47 is read from the memory card 30 into the RAM 13. After that, the processing returns to the data conversion processing.

As shown in FIG. 6, when the conversion object file is selected by the conversion object selection processing (Step S31), an estimated file size after the selected conversion object file is converted into the electronic file in the specified data format is calculated (Step S32). At Step S32, the estimated file size may be calculated, for example, such that a conversion rate of the data size when the data format of the conversion object file is converted into the specified data format is multiplied by a data amount of the conversion object data.

In the present embodiment, the estimated file size is calculated by multiplying the amount of image data of individual pages (namely, the number of pages of the document) contained in the conversion object file by a conversion rate of the data size. The conversion rate of the data size may be obtained in advance, for each of other data formats, by experiment, calculation and the like, as an increase rate or a decrease rate of an average file size after the conversion to the specified data format. For example, when an electronic file in JPEG format is converted into an electronic file in the specified data format, the conversion rate of the data size is 70 percent. When an electronic file in PDF format is converted into an electronic file in the specified data format, the conversion rate of the data size is 85 percent.

Then, a determination is made as to whether the estimated file size calculated at Step S32 is equal to or smaller than the available capacity of the memory card 30 (Step S33). If the estimated file size is equal to or smaller than the available capacity of the memory card 30 (YES at Step S33), when the conversion object file is converted into an electronic file in the specified data format, it is expected that shortage in available capacity will not occur even if the converted file is written to the memory card 30. Therefore, "available capacity exists" is set in a specified storage area in the RAM 13.

One page's worth of the image data that are contained in the conversion object file that is stored in the RAM 13 are converted into the image data in the specified data format in the RAM 13 (Step S34). The converted image data are written to an empty area of the memory card 30 so that they can be stored in a storage folder in the memory card 30. A determination is made as to whether the converted image data have been written to the memory card 30 (Step S35).

In a case where the converted image data have been written to the memory card 30 (YES at Step S35), a determination is made as to whether the image data for all of the pages that are contained in the conversion object file have been converted (Step S36). In a case where unconverted image data exist among the image data that are contained in the conversion object file (NO at Step S36), the processing returns to Step S34, and the image data that correspond to the next page are converted into the image data in the specified data format in the same manner as described above. Thus, the processing at Step S34 to Step S36 is performed repeatedly until writing to the memory card 30 becomes impossible (NO at Step S35), which will be described later. The image data that are contained in the conversion object file are thereby converted sequentially for each page.

In a case where the image data for all of the pages that are contained in the conversion object file have been converted (YES at Step S36), the converted file that includes the converted image data (in other words, the electronic file in the specified data format) is stored in the storage folder in the memory card 30. In this case, the electronic file that is the conversion source that is stored in the specified folder in the memory card 30 (in other words, the conversion object file) is deleted (Step S38). This prevents the same electronic file from being stored in duplicate in different data formats in the memory card 30. This in turn makes it possible to ensure available capacity in the memory card 30 and to reduce the possibility that the incompatible files in the specified folder will be converted many times. After Step S38 has been performed, the processing returns to the main processing (refer to FIG. 4).

On the other hand, in a case where the estimated file size is larger than the available capacity of the memory card 30 (NO at Step S33), it is assumed that shortage in available capacity will occur when the converted file is written to the memory card 30. Even if the estimated file size is equal to or smaller than the available capacity of the memory card 30 (YES at Step S33), there are cases in which a total data size of the converted image data becomes larger than the estimated file size in the course of performing data conversion for each page, and the available capacity of the memory card 30 becomes insufficient, whereby the converted image data cannot be written (NO at Step S35). In these cases, memory full processing described below is performed (Step S39).

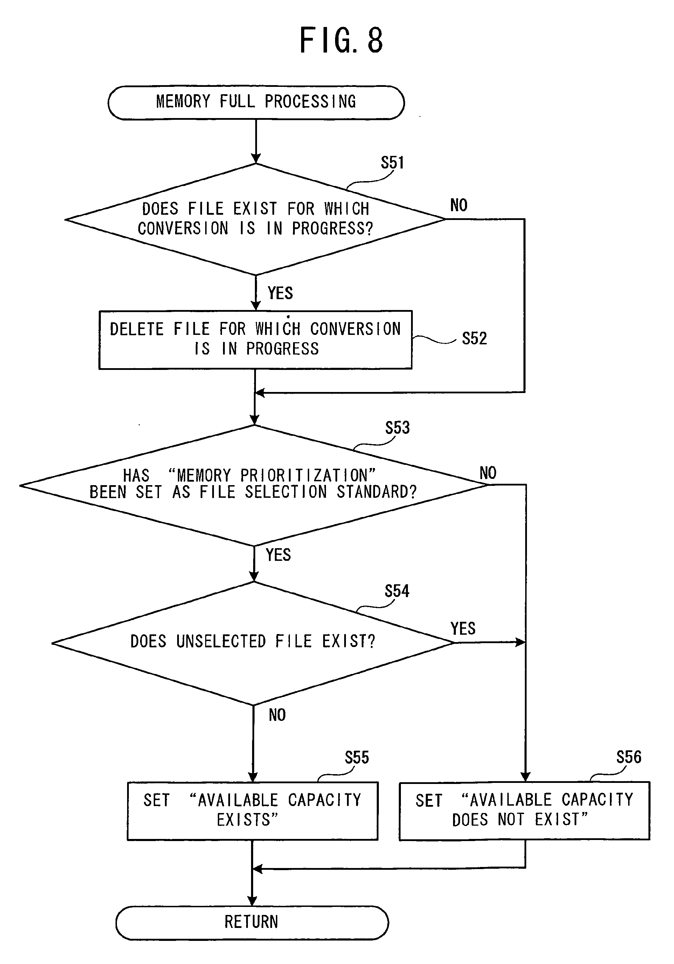

As shown in FIG. 8, in the memory full processing, first, a determination is made as to whether an electronic file exists for which the conversion is in progress (Step S51). More specifically, when the estimated file size is not smaller than the available capacity of the memory card 30 (NO, at Step S33), the data conversion is not performed at Step S34. In this case, therefore, the electronic file for which the conversion is in progress does not exist (NO, at Step S51). On the other hand, when the converted image data cannot be written (NO, at Step S35), part of the image data contained in the conversion object file has already been converted. In this case, therefore, the electronic file for which the conversion is in progress does exist (YES at Step S51).

In this case, the electronic file for which the conversion is in progress (in other words, the converted image data) is deleted from the storage folder in the memory card 30 (Step S52). Thus, the electronic file for which the data conversion has not been completely performed is prevented from being stored in the memory card 30. This in turn makes it possible to ensure available capacity in the memory card 30. On the other hand, the electronic file that is the conversion source (in other words, the conversion object file) that is stored in the specified folder in the memory card 30 is not deleted. Therefore, after the available capacity of the memory card 30 has been ensured, the same conversion object can be subjected to data conversion again.

In a case where the electronic file for which the conversion is in progress does not exist (NO at Step S51), or in a case where the electronic file for which the conversion is in progress is deleted (Step S52), a determination is made as to whether memory prioritization has been set as the file selection standard (Step S53). In a case where memory prioritization has been set as the file selection standard (YES at Step S53), a determination is made as to whether an unselected file exists in the specified folder (Step S54). In a case where the unselected file does exist (YES at Step S54), "available capacity exists" is set in a specified storage area in the RAM 13 (Step S55).

As described above, when memory prioritization has been set as the file selection standard, the conversion object files are sequentially selected, starting with the file with the largest file size. The conversion object file to be selected next has a smaller file size than the currently selected conversion object file. Therefore, even when the available capacity of the memory card 30 is insufficient, there are cases in which it is possible to write the converted file that is based on the conversion object file to be selected next. For that reason, in a case where memory prioritization has been set as the file selection standard and the unselected file exists, the data conversion of the conversion object file to be selected next is performed by setting "available capacity exists" at Step S55. This will be described later in detail.

On the other hand, in a case where one of battery prioritization, progress prioritization and date-time prioritization has been set as the file selection standard (NO at Step S53), "available capacity does not exist" is set in the specified storage area in the RAM 13 (Step S56). In a case where memory prioritization has not been set as the file selection standard, the conversion object file to be selected next does not necessarily have a smaller file size than the currently selected conversion object file. Therefore, the data conversion is stopped, as described later, by setting "available capacity does not exist".

In a case where the unselected file does not exist (NO at Step S54), the conversion object file to be selected next does not exist. Therefore, in the same manner as that described above, "available capacity does not exist" is set in the specified storage area in the RAM 13 (Step S56). After "available capacity exists" or "available capacity does not exist" is set (Step S55 and Step S56), the processing returns to the data conversion processing (refer to FIG. 6), and further returns to the main processing (refer to FIG. 4).

As shown in FIG. 4, after the data conversion processing (Step S23) has been completed, the specified storage area in the RAM 13 is referred to and a determination is made as to whether the available capacity exists in the memory card 30 (Step S24). In a case where "available capacity exists" is set in the specified storage area in the RAM 13 (YES at Step S24), a determination is made as to whether an electronic file is stored in the specified folder in the memory card 30 (Step S27). In a case where the electronic file is not stored in the specified folder (NO at Step S27), a determination is made that the data conversion has been performed for all of the electronic files that were stored in the specified folder.

In that case, a folder display screen that displays a list of the converted files that are stored in the storage folder in the memory card 30 is displayed on the display panel 3 (Step S28). If the user operates the character keys 67, for example, and thereby selects a given one of the converted files from the folder display screen, the user can view the document that is based on the selected electronic file.

On the other hand, in a case where the electronic file is stored in the specified folder (YES at Step S27), the processing returns to Step S20. In the same manner as that described above, in a case where a convertible file exists in the specified folder, the data conversion processing is performed (YES at Step S20, Step S23). The above-described processing is repeatedly performed until all of the convertible files in the specified folder have been converted (NO at Step S20 or NO at Step S27), or until a determination is made that there is no available capacity in the memory card 30 (NO at Step S24).

In a case where the convertible file does not exist in the specified folder (NO at Step S20), the conversion impossible screen indicating that data conversion cannot be performed is displayed (Step S21). After Step S21 has been performed, the above-described folder display screen is displayed (Step S28). Thus, only the convertible files among the electronic files that are stored in the specified folder are converted into electronic files in the specified data format, and the converted files are displayed in list form.

In a case where "available capacity does not exist" is set in the specified storage area in the RAM 13 (NO at Step S24), a memory full screen 32, an example of which is shown in FIG. 9, is displayed on the display panel 3 (Step S25). After Step S25 has been performed, the above-described folder display screen is displayed (Step S28). As shown in FIG. 9, the memory full screen 32 indicates that there is no available capacity to store the converted file in the memory card 30.

When the folder display screen is displayed at Step S28, the LED display portion 7 is controlled such that it displays an ordinary pattern (in this case, a state in which the light is off), and the operations of the keys in the operation portion 6 are enabled. Then, the processing returns to Step S11. The data conversion is performed (Step S14 to Step S28) every time a timing is detected at which the specified action (specifically, the removal of the USB cable 9 or the insertion of the memory card 30) is performed (YES at Step S11, or YES at Step S12), until the power supply of the portable terminal 1 is turned off.

As explained above, in the portable terminal 1 of the present embodiment, the determination is made as to whether it is a timing of converting the incompatible file to the electronic file in the specified data format. In a case where the determination is made that it is the timing of converting the incompatible file, the incompatible file is acquired from the memory card 30 into the RAM 13. The acquired incompatible file is converted into the electronic file in the specified data format, and stored in the memory card 30. Accordingly, the portable terminal 1 can convert an electronic file into the electronic file in the specified data format that is suitable for processing, without the user inputting a command to convert the data format. Accordingly, it is possible to reduce operations that the user is required to perform. As a result, there is no need for the user to confirm whether it is the timing suitable for data conversion, and the user can therefore easily view the electronic file on the display device.

More specifically, the portable terminal 1 is connected through the USB cable 9 to the multifunction device 2 that transmits an electronic file, and causes the memory card 30 to store the electronic file received through the USB cable 9. When the USB cable 9 is removed, the portable terminal 1 determines that it is disconnected from the multifunction device 2. At this time, the portable terminal 1 determines that it is the timing of performing data conversion of the incompatible file, and starts the data conversion. Accordingly, the portable terminal 1 can start to convert the received electronic file into the specified data format, at the timing at which reception of the electronic file from an external device, such as the multifunction device 2, is completed. When the portable terminal 1 performs the data conversion of the electronic file, the portable terminal 1 is disconnected from the external device. Therefore, the data conversion is not started while the portable terminal 1 is receiving the electronic file. It is therefore possible to reduce data conversion failure, an increase in processing load, and the like.

The memory card 30 that stores electronic files can be inserted into the portable terminal 1. When a determination is made that the memory card 30 is inserted, the portable terminal 1 determines that it is the timing of performing data conversion of the incompatible file, and starts the data conversion. Therefore, the user can cause the portable terminal 1 to convert the incompatible file by only inserting the memory card 30 into the portable terminal 1, without performing a command operation for the data conversion etc.

The portable terminal 1 converts only the incompatible files stored in the specified folder in the memory card 30 to the electronic files in the specified data format. Therefore, if the user stores in the specified folder an electronic file that the user wants to view on the portable terminal 1, the user can easily view the electronic file on the portable terminal 1. Electronic files stored in a folder other than the specified folder can be excluded from being data format conversion objects.

When the data conversion of the incompatible file is being performed, the portable terminal 1 notifies the user that the data conversion is in progress, and inhibits reception of an operation command from the user. Therefore, the user can easily ascertain that the data conversion of the incompatible file is in progress. The portable terminal 1 can smoothly perform the data conversion of the incompatible file.

In the embodiment that is described above, the portable terminal 1 corresponds to a display device of the present invention. The memory card 30 corresponds to a first storage device, a second storage device and an external storage device of the present invention. The CPU 11 that performs Step S11 and the CPU 11 that performs Step S 12 respectively correspond to a timing determination portion of the present invention. The CPU 11 that performs Step S31 corresponds to a file acquisition portion. The CPU 11 that performs Step S34 corresponds to a conversion portion and a first storage control portion of the present invention.

The USB interface 18 corresponds to a connection portion and a second storage control portion of the present invention. The CPU 11 that performs Step S11 corresponds to a disconnection determination portion of the present invention. The memory card interface 17 corresponds to an attachment portion of the present invention. The CPU 11 that performs Step S12 corresponds to an attachment determination portion of the present invention. The CPU 11 that performs Step S32 corresponds to a size calculation portion of the present invention. The CPU 11 that performs Step S33 corresponds to a first capacity determination portion of the present invention. The CPU 11 that performs Step S35 corresponds to a second capacity determination portion of the present invention. The CPU 11 that performs Step S52 corresponds to a first deletion portion of the present invention.

The CPU 11 that performs Step S14, Step S15 and Step S20 corresponds to a file determination portion of the present invention. The CPU 11 that performs Step S36 corresponds to a completion determination portion of the present invention. The CPU 11 that performs Step S38 corresponds to a second deletion portion of the present invention. The CPU 11 that performs Step S16 corresponds to a notification portion and an inhibition portion of the present invention. The CPU 11 that performs Step S28 corresponds to a display control portion of the present invention.

Note that the display device according to the present disclosure is not limited to the embodiment that is described above, and modifications can be made within the scope of the present invention. In the embodiment that is described above, the portable terminal 1 in which the image display is performed on the electrophoretic display panel 3 is used as an example, but the display device is not limited to this example. For example, a display device may also be used in which the image display is performed on a known liquid crystal display or the like. A non-portable type of display device such as a digital photo frame or the like may also be used.

In the embodiment that is described above, the pre-conversion electronic file and the converted file are both stored in the memory card 30. This eliminates the need to provide a storage device for storing the pre-conversion electronic file and the converted file separately in the portable terminal 1, and it also makes the portable terminal 1 slimmer and lighter in weight, thereby reducing the manufacturing cost, and the like. The form in which the various types of files are stored in the display device is not limited to this example.

For example, a built-in memory may be provided for storing the various types of files in the portable terminal 1. The pre-conversion electronic file and the converted file may be both stored in the built-in memory. The storage device in which the pre-conversion electronic file is stored and the storage device in which the converted file is stored may also be different devices. For example, the pre-conversion electronic file may be stored in the memory card 30, and the converted file may be stored in the built-in memory.

In the embodiment that is described above, the converted file is stored in the storage folder in the memory card 30, but the storage location of the converted file is not limited to this example. For example, the converted file may also be stored in the root directory of the memory card 30. The converted files that are stored in the storage folder are displayed in list form on the folder display screen at Step S28, but the converted files may also be selectably displayed. For example, the converted file that is stored in the root directory may also be selectably displayed on the folder display screen.

In the embodiment that is described above, the electronic file that is the conversion source is deleted from the memory card 30 every time the data conversion of one electronic file is completed. Thus, even if the data conversion processing of the electronic file is interrupted, the data conversion of the same electronic file can be performed again from the beginning. The timing of deleting the electronic file can be changed. For example, every time the conversion of one page's worth of image data is completed, a determination may be made as to whether the data conversion is completed. In this case, every time the conversion of one page's worth of image data is completed, the image data for the page included in the electronic file that is the conversion source may be deleted. The electronic file deletion may be performed after the data conversion has been completed for all of the electronic files present in the specified folder.

In the embodiment that is described above, the unselected files are selected one by one as the conversion object file (refer to FIG. 7) such that, after the data conversion of the selected one of the conversion object files is completed, the next conversion object file is selected. In the conversion object selection processing, a specified number of conversion object files may be acquired, and the specified number is not limited to one. For example, a plurality of conversion object files may be selected at one time as the specified number of conversion object files.

In the embodiment that is described above, when one of the removal of the USB cable 9 and the insertion of the memory card 30 is performed, a determination is made that it is the start timing of the data conversion. The start timing of the data conversion can be changed. For example, only one of the removal of the USB cable 9 and the insertion of the memory card 30 may be set as the start timing of the data conversion. Alternatively, when a display device is used that performs wireless communication using a protocol such as Bluetooth, a determination is made as to whether a command indicating communication completion, for example, is received from an external device. The timing at which a determination is made that the command indicating communication completion is received may be set as the start timing of the data conversion.

In the embodiment that is described above, the portable terminal 1 can select the conversion object file based on the registration date-time that the user registered in the electronic file (refer to Step S46 and Step S47, FIG. 7). However, the standard time-date that is used for the portable terminal 1 to select the conversion object file is not limited to the date-time registered by the user. The standard time-date can be appropriately changed to a date-time when the electronic file was edited, a date-time when the electronic file was created, or the like.

In the embodiment that is described above, the portable terminal 1 automatically starts the data conversion of the electronic file. However, the portable terminal 1 may perform the data conversion of the electronic file in accordance with a command from the user. For example, when the user inputs a command to start the data conversion, the portable terminal 1 determines whether the data conversion is possible in the same manner as in the above-described embodiment. The portable terminal 1 may perform the data conversion of the electronic file when it determines that the data conversion can be performed.

## Claims

1. A display device (1) comprising:
a timing determination portion (11) that determines whether it is a timing of converting an incompatible file into an electronic file in a specified data format, the incompatible file being an electronic file in a data format different from the specified data format;
a file acquisition portion (11) that acquires the incompatible file from a first storage device (30) when the timing determination portion determines that it is the timing;
a conversion portion (11) that converts the incompatible file acquired by the file acquisition portion into an electronic file in the specified data format to create a converted file; and
a first storage control portion (11) that stores, in a second storage device (30), the converted file created by the conversion portion.

2. The display device according to claim 1, further comprising:
a connection portion (18) that connects to an external device that transmits an electronic file;
a second storage control portion (18) that causes the first storage device to store the electronic file received from the external device via the connection portion; and
a disconnection determination portion (11) that determines whether the connection by the connection portion is disconnected,
wherein
when the disconnection determination portion determines that the connection by the connection portion is disconnected, the timing determination portion determines that it is the timing.

3. The display device according to claim 1 or 2, further comprising:
an attachment portion (17) to which and from which an external storage device (30) can be attached and detached, the external storage device being attachable to and detachable from another device; and
an attachment determination portion (11) that determines whether the external storage device is attached to the attachment portion,
wherein
the first storage device is the external storage device, and
when the attachment determination portion determines that the external storage device is attached to the attachment portion, the timing determination portion determines that it is the timing.

4. The display device according to any one of claims 1 to 3, wherein
the file acquisition portion acquires the incompatible file, among the incompatible files that have not been acquired by the file acquisition portion, in an order of registration date and time registered by a user, starting with the incompatible file with the oldest date and time.

5. The display device according to any one of claims 1 to 3, wherein
the file acquisition portion acquires the incompatible file, among the incompatible files that have not been acquired by the file acquisition portion, in an order of registration date and time registered by a user, starting with the incompatible file with the most recent date and time.

6. The display device according to claim 1, further comprising:
a size calculation portion (11) that calculates a post-conversion size that is an estimated data size of the converted file to be created from the incompatible file acquired by the file acquisition portion; and
a first capacity determination portion (11) that determines whether the post-conversion size calculated by the size calculation portion is equal to or smaller than an available capacity of the second storage device,
wherein
the conversion portion creates the converted file, when the first capacity determination portion determines that the post-conversion size is equal to or smaller than the available capacity of the second storage device.

7. The display device according to claim 6, wherein
the file acquisition portion acquires the incompatible file, among the incompatible files that have not been acquired by the file acquisition portion, in an order of a data size, starting with the incompatible file whose data size is the largest.

8. The display device according to claim 6 or 7, wherein
among the incompatible files that have not been acquired by the file acquisition portion, the file acquisition portion acquires the incompatible file whose data size is the second largest to the incompatible file that has been most recently acquired.

9. The display device according to any one of claims 6 to 8, wherein
the incompatible file includes a plurality of segment data formed in predetermined units,
the conversion portion converts the plurality of segment data included in the incompatible file into the specified data format one at a time to create converted segment data, and
the conversion portion creates the converted file by storing the converted segment data in the second storage device,
the display device further includes:
a second capacity determination portion (11) that determines whether an available capacity capable of storing the converted segment data exists in the second storage device, every time the converted segment data is created by the conversion portion; and
a first deletion portion (11) that deletes the converted segment data stored in the second storage device, when the second capacity determination portion determines that the available capacity capable of storing the converted segment data does not exist.

10. The display device according to claim 9, wherein:
the segment data are image data formed in page units; and
the size calculation portion calculates the post-conversion size based on a number of pages corresponding to an amount of the image data contained in the incompatible file.

11. The display device according to any one of claims 1 to 10, further comprising:
a file determination portion (11) that determines whether the incompatible file exists in a specified folder of the first storage device,
wherein
the conversion portion only converts the incompatible file in the specified folder to create the converted file.

12. The display device according to any one of claims 1 to 11, further comprising:
a completion determination portion (11) that determines whether conversion is completed by the conversion portion; and
a second deletion portion (11) that deletes from the first storage device the incompatible file for which the conversion is completed, when the completion determination portion determines that the conversion is completed.

13. The display device according to claim 12, wherein:
when the completion determination portion determines that the conversion is completed, the second deletion portion deletes the incompatible file for which the conversion is completed, from a common storage device that includes the first storage device and the second storage device; and
when the incompatible file is deleted by the second deletion portion, the file acquisition portion acquires the next incompatible file from the common storage device.

14. The display device according to any one of claims 12 or 13, further comprising:
a display control portion (11) that, when the completion determination portion determines that the conversion is completed by the conversion portion, causes a display portion (3) to display the converted file stored in the second storage device.

15. The display device according to any one of claims 1 to 14, further comprising:
a notification portion (11) that, when conversion is being performed by the conversion portion, notifies the user that conversion of the incompatible file is in progress; and
an inhibition portion (11) that inhibits reception of an operation command from the user when the conversion is being performed by the conversion portion.

16. A data conversion method performed by a display device (1), comprising the steps of:
determining whether it is a timing of converting an incompatible file into an electronic file in a specified data format, the incompatible file being an electronic file in a data format different from the specified data format;
acquiring the incompatible file from a first storage device when a determination is made that it is the timing;
converting the acquired incompatible file into an electronic file in the specified data format to create a converted file; and
storing the created converted file in a second storage device.

17. The data conversion method according to claim 16, further comprising the steps of:
calculating a post-conversion size that is an estimated data size of the converted file to be created from the acquired incompatible file; and
determining whether the calculated post-conversion size is equal to or smaller than an available capacity of the second storage device,
wherein
the converted file is created from the acquired incompatible file, when a determination is made that the post-conversion size is equal to or smaller than the available capacity of the second storage device.

18. A computer-readable medium storing a data conversion program, the data conversion program comprising instructions that cause a computer (11) of a display device (1) to perform the steps of:
determining whether it is a timing of converting an incompatible file into an electronic file in a specified data format, the incompatible file being an electronic file in a data format different from the specified data format;
acquiring the incompatible file from a first storage device when a determination is made that it is the timing;
converting the acquired incompatible file into an electronic file in the specified data format to create a converted file; and
storing the created converted file in a second storage device.

19. The computer-readable medium according to claim 18, wherein the instructions causes the computer to perform the steps of:
calculating a post-conversion size that is an estimated data size of the converted file to be created from the acquired incompatible file; and
determining whether the calculated post-conversion size is equal to or smaller than an available capacity of the second storage device,
wherein
the converted file is created from the acquired incompatible file, when a determination is made that the post-conversion size is equal to or smaller than the available capacity of the second storage device.
